(19) Europäisches Patentamt
European Patent Office
Office européen des brevets

(11) **EP 2 076 824 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(21) Anmeldenummer: **07803062.4**

(22) Anmeldetag: **30.08.2007**

(51) Int Cl.:
**G05B 17/02** *(2006.01)*

(86) Internationale Anmeldenummer:
**PCT/EP2007/059053**

(87) Internationale Veröffentlichungsnummer:
**WO 2008/043603 (17.04.2008 Gazette 2008/16)**

(54) **VERFAHREN ZUR STEUERUNG UND/ODER REGELUNG EINES INDUSTRIELLEN PROZESSES**

METHOD FOR CONTROLLING AND/OR REGULATING AN INDUSTRIAL PROCESS

PROCÉDÉ DE COMMANDE ET/OU RÉGULATION D'UN PROCESSUS INDUSTRIEL

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.10.2006 DE 102006048031
31.05.2007 DE 102007025447**

(43) Veröffentlichungstag der Anmeldung:
**08.07.2009 Patentblatt 2009/28**

(73) Patentinhaber: **SIEMENS AKTIENGESELLSCHAFT
80333 München (DE)**

(72) Erfinder:
• **WEINZIERL, Klaus
90480 Nürnberg (DE)**
• **FRANZ, Klaus
90455 Nürnberg (DE)**
• **SCHMORS, Stefan
27726 Worpswede (DE)**

(56) Entgegenhaltungen:
**DE-A1- 4 325 187     DE-A1- 19 641 431
DE-A1- 19 851 554**

**Beschreibung**

Die vorliegende Erfindung betrifft ein Verfahren zur Steuerung und/oder Regelung eines industriellen Prozesses gemäß dem Oberbegriff des Anspruchs 1.

Bei der Steuerung von verschiedenen Prozessen in der Industrie, beispielsweise bei der Steuerung bzw. Regelung einer einer Warmband-Walzstraße nachgeordneten Kühlstrecke tritt das Problem auf, dass in der Regel nur am Eingang der Strecke und am Ende der Strecke gemessen werden kann, aber keine Zwischenmessstationen möglich sind. Derartige Strecken können aber sehr lang sein, wie beispielsweise die Kühlstrecke einer Warmband-Walzstraße, bei der das warmgewalzte Band über eine relativ große Länge mit Kühlwasser bespritzt und dadurch abgekühlt werden muss. Dadurch entsteht das Problem, dass die am Ende der Kühlstrecke gemessenen Messwerte nur mit einer sehr großen Totzeit in Regelgrößen für die Regelung der Strecke umgesetzt werden können und für die über die Strecke verteilten Stellglieder nur die aufgrund der am Anfang und am Ende der Strecke gemessenen Werte berechnete Regelgrößen zur Verfügung stehen, aber keine Zwischenwerte.

Dazu ist es in der Regelungstechnik allgemein bekannt, anhand von bekannten physikalisch-mathematischen Zusammenhängen ein Modell der Strecke zu erstellen und mittels des Modells Rechenwerte für die Regelung oder gegebenenfalls Führungsgrößen für eine Steuerung zu berechnen. Ein derartiges Verfahren ist beispielsweise in dem eigenen Patent EP 1 244 816 B1 beschrieben. Dabei wird die einer Warmband-Walzstraße nachgeordnete Kühlstrecke unter Zuhilfenahme eines physikalisch-mathematischen Modells geregelt, in dem der Kühlvorgang abgelegt ist und welches als Eingangsgrößen Materialparameter des zu walzenden Bands, sowie gemessene Temperaturen am Anfang und am Ende der Kühlstrecke erhält. Mit Hilfe des Modells und den damit berechneten Temperaturen werden dabei Ventilstellungen von entlang der Kühlstrecken angeordneten Kühlwasserspritzventilen ermittelt. Diese Werte werden mit Hilfe von den am Ende der Kühlstrecke gemessenen Haspeltemperaturwerten gemäß einer weiteren, auf physikalischen Zusammenhängen basierenden Logik korrigiert, um so einen Abkühlverlauf zu ermitteln, der dem tatsächlichen Istabkühlverlauf möglichst nahekommt und eine entsprechende Regelung der Kühlstrecke vornehmen zu können.

Dabei hat sich herausgestellt, dass die Eingangsparameter des physikalisch-mathematischen Modells nicht alle für den Abkühlverlauf entscheidenden Größen enthalten können, zumindest nicht mit hinreichender Genauigkeit, um eine unter tatsächlichen Fertigungsbedingungen auftretende Abkühlung mit optimaler Genauigkeit zu berechnen. Daher wurde der Vorschlag gemacht, die Berechnung von berechneten Istwerten mittels physikalisch-mathematischer Modelle bei derartigen Steuerungs- bzw. Regelungsverfahren mit Hilfe von statistischen Verfahren zu optimieren.

Ein entsprechendes Regelungsverfahren eines industriellen Prozesses, nämlich der Kühlstrecke von Warmband-Walzstraßen ist der eigenen Patentanmeldung DE 102 03 787 A1 zu entnehmen. Dabei macht man sich die Tatsache zunutze, dass das physikalisch-mathematische Modell der Kühlstrecke über den Zeitraum der Kühlung eines zu kühlenden Metallbands laufend korrigiert wird, wobei am Ende dieser Kühlzeit für jedes Band ein optimaler Korrekturfaktor feststeht. Dieser Korrekturfaktor wird nun zusammen mit den Eingangsgrößen des Modells, nämlich den Materialparametern des Walzbandes und den Temperaturen bzw. dem Temperaturverlauf an den Messstellen in einem Produktdatensatz abgelegt und steht beim Kühlen nachfolgender Walzbleche zur Korrektur des dann zu kühlenden Bleches zur Verfügung. Sind genügend derartiger Produktdatensätze abgelegt, kann bei einem neuen Kühlprozess zur Korrektur des physikalisch-mathematischen Modells auf die vorhandenen Produktdatensätze zurückgegriffen werden. Dabei können dann Datensätze mit dem neu zu walzenden Blech möglichst ähnlichen Parametern ausgewählt werden und die damals empirisch ermittelten und dort abgelegten Korrekturfaktoren zur Korrektur des Modells für den Kühlprozess des neu zu walzenden Blechs herangezogen werden.

Zur Auswahl des geeigneten bzw. von geeigneten Produktdatensätzen oder zur gewichteten Rechnung eines statistisch korrigierten Korrekturfaktors stehen dabei verschiedene statistische Verfahren zur Verfügung, beispielsweise eine in der Einleitung der DE 102 03 787 A1 beschriebene Adaption mit Hilfe von Vererbungstabellen oder mit Hilfe von neuronalen Netzen, sowie die Berechnung des Korrekturfaktors anhand der gemäß ihrer Ähnlichkeit zum neu zu kühlenden Walzband gewichteten Korrekturfaktoren von zuvor gekühlten Walzbändern.

Dieses Verfahren zeigt bei vielen zu steuernden oder zu regelnden Prozessen, insbesondere der Kühlstrecke von Warmwalzstraßen die bisher besten Ergebnisse.

DE 19 641 431 beschreibt ein Verfahren zur Fertigung von Produkten wobei ein Modell des Prozesses gebildet wird.

Hiervon ausgehend ist es Aufgabe der vorliegenden Erfindung, ein Verfahren der gattungsgemäßen Art derart weiterzubilden, dass es eine höhere Genauigkeit aufweist und /oder in einem breiteren Einsatzbereich angewendet werden kann.

Diese Aufgabe wird mit den Merkmalen des Anspruchs 1 gelöst.

Der Erfinder hat erkannt, dass zum Steuern bzw. Regeln eines Prozesses oder einer industriellen Anlage wie z.B. der Kühlstrecke einer Warmbandstraße mehrere Einflussfaktoren berücksichtigt werden müssen, um zu optimalen Ergebnissen zu gelangen. Oft steht jedoch nur die Messung einer oder weniger Größen zur Verfügung, um als Eingangsgröße für das Modell zu diesen, wohingegen für die Korrektur der Modellberechnungen zwei oder mehrere Einflussfaktoren entscheidend sind. Erfindungsgemäß wird daher ein Verfahren vorgeschlagen, mit dem mit M möglichen Messwerten N Korrekturfaktoren für die Modellberechnung ermittelt werden, wobei N > M.

Dieses Verfahren ist für ein genaues Regeln der Kühlstrecke einer Warmbandstraße besonders geeignet. Hier hängt ein erster Einflussfaktor von dem Wärmeübergang des jeweiligen Bands zur Umgebung ab und ein zweiter Einflussfaktor von der Geschwindigkeit der Phasenumwandlung des jeweiligen Bands, wobei als Messwert aber nur eine Temperaturmessung zur Verfügung steht. Wie der Erfinder weiter erkannt hat können die beiden Einflussfaktoren nach dem aus der DE 102 03 787 A1 bekannten Verfahren nicht auf Basis der in den Produktdatensätzen von zuvor gewalzten und gekühlten Bänder abgelegten Korrekturfaktoren statistisch korrigiert werden. Denn selbst wenn beide Einfluss- bzw. Korrekturfaktoren in den Produktdatensätzen abgelegt wären, steht zur Ermittlung zweier Unbekannter in dem lokalen Modell des neu zu fertigenden Produkts nur eine Gleichung zur Verfügung, so dass sich mehrere mathematisch mögliche Lösungen ergeben, aber nicht feststeht, welche davon die physikalisch sinnvolle ist. Auch ein Ausmitteln der möglichen Lösungen ist dabei nicht zielführend.

Erfindungsgemäß wird daher vorgeschlagen, das in der Patentschrift EP 1 244 816 B1 beschriebene Verfahren dadurch zu verbessern, dass das Modell nicht nur mit einer Anzahl Primärkorrekturverfahren korrigiert wird (im Fall der Regelung einer Kühlstrecke einer Warmbandstraße mit einem den Wärmeübergang vom zu kühlenden Blech in die Umgebung widerspiegelnden Korrekturfaktor), sondern auch mit einer Anzahl Sekundärkorrekturfaktoren (im Fall der Regelung der Kühlstrecke mit einem die Geschwindigkeit der Phasenumwandlung im zu kühlenden Band widerspiegelnden Korrekturfaktor). Weil dabei nur eine Anzahl von Messwerten für die Ermittlung der Korrekturfaktoren zur Verfügung steht, die der Anzahl der Primärkorrekturfaktoren entspricht (im Fall der Kühlstrecke ein Messwert, nämlich eine Temperatur bzw. Temperaturdifferenz oder der Verlauf davon), wird zumindest der oder die Sekundärkorrekturfaktoren, bevorzugt auch der oder die Primärkorrekturfaktoren, erfindungsgemäß numerisch durch geeignete Näherungs- oder Optimierungsverfahren oder sonstige Algorithmen berechnet.

Das Verfahren verspricht dabei insbesondere bei der Kühlstrecke einer Warmbandstraße, aber auch bei anderen vergleichbaren Prozessen oder Anlagen eine gute Lösung, wenn neben einem primären Einflussfaktor, hier z.B. dem Wärmeübergang, weitere Einflussfaktoren bei der Regelung oder Steuerung ins Spiel kommen. So konnte beispielsweise bei der Kühlstrecke bei der Produktion hochgekohlter Stahlbänder bisher keine auch nur annähernd befriedigende Lösung erzielt werden, da der Einfluss der Gefügeumwandlung nicht berücksichtigt wurde. Hochgekohlte Stahlbänder werden daher traditionell mit schlechter Haspeltemperaturqualität produziert. Erst mit dem erfindungsgemäßen Verfahren gelingt es, durch das Einbeziehen des Einflusses des Phasenübergangs im gekühlten Band bzw. der Gefüge-Umwandlungsgeschwindigkeit in Abhängigkeit von den Prozessbedingungen zusätzlich zum Einfluss des Wärmeübergangs eine gute Näherung für die Adaption des Modells der Kühlstrecke zu generieren.

Vorteilhaft werden dabei die Korrekturfaktoren aus dem Modell und dem oder den Messwerten mit Hilfe eines insbesondere iterativen Optimierungsalgorithmus ermittelt, indem für jeden mit dem Algorithmus zu ermittelnden Korrekturfaktor eine Vielzahl von Testwerten angegeben wird und durch iteratives Durchprobieren versucht wird, den am besten geeigneten Wert zu finden.

Als besonders vorteilhaft hat es sich dabei herausgestellt, wenn die Korrekturfaktoren mit Hilfe von in früheren Bearbeitungen oder Fertigungen gemachten Erfahrungen ermittelt werden. Dazu werden bei der Bearbeitung oder Fertigung eines jeden Produkts bestimmte Erfahrungen in einem Produktdatensatz aufgezeichnet, zusammen mit den Eingangsgrößen für diese Fertigung oder Bearbeitung, beispielsweise produktbezogenen Parametern oder anlagenbezogenen Parametern.

Als die Erfahrungen beziehungsweise als Erfahrungswerte werden jetzt aber nicht die bei der Bearbeitung oder Fertigung eines Produkts gewählten Korrekturfaktoren abgespeichert, sondern die Information, für welche Menge von Korrekturfaktoren gute Ergebnisse erzielt werden können. Für jedes neue bzw. aktuell zu bearbeitende Produkt werden die Korrekturfaktoren dann nicht aus den Korrekturfaktoren der ähnlichen Bänder ermittelt, sondern aus der obenstehenden Information und/oder anderen geeigneten Daten, die zu jedem schon bearbeiteten Produkt ermittelt werden oder die in den jeweiligen Produktdatensätzen abgespeichert worden sind.

Die Erfahrungswerte sind dabei in jedem Produktdatensatz so abzuspeichern, dass später noch alle möglichen Lösungen für die Korrekturfaktoren gefunden werden können. Erst bei der Fertigung oder Bearbeitung des aktuellen Produkts wird dann durch Zusammenschau mehrerer als dem aktuellen Produkt ähnlich qualifizierter Produktdatensätze die Werte der für das aktuelle Produkt geltenden Primär- und Sekundärkorrekturfaktoren ermittelt. Die Festlegung auf konkrete Werte für jeden Korrekturfaktor erfolgt also nicht unmittelbar nach der Produktion des zugeordneten Produkts und damit auch nicht eine entsprechende Abspeicherung der auf einen konkreten Wert festgelegten Korrekturfaktoren mit dem Produktdatensatz des jeweiligen Produkts. Vielmehr werden die Korrekturfaktoren, die einem bei der Produktion eines neuen Produkts als ähnlich qualifizierten Produktdatensatz zuzuordnen sind, erst nach der Ermittlung der ähnlichen Bänder ermittelt. Es wäre ebenfalls denkbar, auch die Anzahl an Primär- und Sekundärkorrekturfaktoren aus den Produktdatensätzen zu ermitteln.

Vorteilhaft kann mit diesem statistischen Ansatz aus einer Anzahl von Messwerten, die geringer als die Anzahl der Einflussfaktoren ist, eine statistische Korrektur der Modellberechnung nach mehreren Richtungen durchgeführt werden, um allen Einflussfaktoren gerecht zu werden, obwohl die Anzahl der Messungen kleiner ist als die Anzahl der Richtungen, in die das Modell zu korrigieren ist.

Als in dem Produktdatensatz des jeweiligen Produkts abzuspeichernde Eingangsgrößen kommen dabei im Fall einer zu regelnden Kühlstrecke einer Warmbandstraße beispielsweise der Kohlenstoffgehalt, der Mangangehalt, die Dicke und Breite des Bandes, sowie die Bandvorlaufgeschwindigkeit und andere in Frage. Für jedes neu zu bearbeitende Produkt können dann die jeweiligen Parameter mit den Parametern der abgespeicherten Produktdatensätze verglichen werden, um so eine Anzahl von ähnlichen Produktdatensätzen zu ermitteln. Dabei können die Produktdatensätze beispielsweise in einem Ringspeicher nach dem FIFO-Prinzip gespeichert werden, wobei also die ältesten Produktdatensätze gelöscht werden, wenn kein Platz mehr für neue Produktdatensätze vorhanden ist, so dass immer möglichst aktuelle Produktdatensätze zum Vergleich mit dem aktuellen Produktwerten herangezogen werden.

In einer vorteilhaften Weiterbildung kann dabei neben den Eingangsparametern eine der Anzahl an Primärkorrekturfaktoren entsprechende Anzahl an Messwerten erfasst und in dem jeweiligen Produktdatensatz abgelegt werden, im Fall der Kühlstrecke beispielsweise der Verlauf der Haspeltemperatur am Ende der Kühlstrecke über die Zeit oder der Verlauf einer Temperaturdifferenz zwischen Haspeltemperatur und der Temperatur am Eingang der Kühlstrecke. Aus den Messwerten wird dann die gewünschte Information ermittelt, aus der nachträglich dann die Korrekturfaktoren für das in der Zukunft zu fertigende, ähnliche Produkt errechnet werden sollen.

Dies geschieht beispielsweise dadurch, dass als die Anzahl an Erfahrungswerten eine Anzahl von mit der Anzahl Messwerte errechneter Rechenwerte in dem Produktdatensatz abgespeichert wird. Dabei wird die Berechnung mit Hilfe des Modells und der abgespeicherten Messwerte durchgeführt, indem eine Vielzahl von Testwerten für jeden der in Frage stehenden Korrekturfaktoren vorgegeben wird und eine Modellberechnung durchgeführt wird, wobei die Rechenwerte jeweils als Funktion der Korrekturfaktoren ermittelt und abgespeichert werden. Bei der Fertigung des nachträglich zu fertigenden bzw. späteren Produkts werden dann die in den ähnlichen Produktdatensätzen abgelegten Rechenwerte dazu herangezogen, für dieses Produkt geeignete Korrekturfaktoren zu ermitteln, die bei den ähnlichen Produkten insgesamt das beste Ergebnis liefern. Dabei kann bzw. können der bzw. die Rechenwerte in den bzw. die Messwerte einfließen oder die Messwerte können separat als eigener Erfahrungswert in den jeweiligen Produktdatensätzen abgelegt werden.

Alternativ dazu kann, anstatt die Rechenwerte als Funktion der Korrekturfaktoren abzulegen, auch jeweils eine Kurve aus den Messwerten berechnet werden, auf der ein mit dem Modell berechneter Rechenwert mit dem Messwert übereinstimmt, wobei die Kurve als Erfahrungswert abgespeichert wird. Zur Ermittlung geeigneter Korrekturfaktoren für das aktuell zu bearbeitende bzw. zu fertigende Produkt können dann aus den als ähnlich ermittelten Produktdatensätzen die gewünschten Werte der Korrekturfaktoren dadurch ermittelt werden, dass die Schnittpunkte der in den ähnlichen Produktdatensätzen gespeicherten Kurven bestimmt werden. Aus den Schnittpunkten können die Korrekturfaktoren für das aktuell zu bearbeitende Produkt dann ermittelt werden, beispielsweise durch Mittelwertbildung, sei es arithmetisch, gewichtet oder auf eine andere geeignete Art.

Ein weiteres, alternatives Verfahren zeichnet sich dadurch aus, dass erst bei oder kurz vor der Fertigung des aktuellen Produkts aus dem in den ermittelten ähnlichen Pröduktdatensätzen abgespeicherten Erfahrungswerten nachträglich Modellberechnungen durchgeführt werden. In den Produktdatensätzen brauchen dann lediglich der oder die Messwerte als die Erfahrungswerte abgespeichert werden. Zur Ermittlung der Korrekturfaktoren werden wiederum eine Vielzahl von Testwerten für die gesuchten Korrekturfaktoren vorgegeben und die Modellberechnungen wiederholt anhand der vorgegebenen Testwerte durchgeführt, so dass sich die optimalen Werte für die Korrekturfaktoren für die aktuelle Fertigung ergeben.

Vorzugsweise können die Testwerte nach einem mathematischen Optimierungsverfahren vorgegeben werden, beispielsweise einem Verfahren, bei dem eine Zielfunktion gebildet wird, welche maximiert oder minimiert wird.

Schließlich kann die Berechnung noch dadurch verbessert werden, dass die ermittelten Korrekturfaktoren anhand der aktuell gemessenen Werte nachgeführt werden, beispielsweise mittels eines Gradientenabstiegsverfahrens.

Die einzelnen Merkmale der Ausführungsformen gemäß den Ansprüchen lassen sich, soweit es sinnvoll erscheint, beliebig kombinieren. Dabei versteht es sich von selbst, dass die vorstehend genannten und die nachstehend noch zu erläuternden Merkmale nicht nur in der angegebenen Kombination, sondern auch in anderen Kombinationen oder in Alleinstellung verwendbar sind, ohne den Rahmen der Erfindung zu verlassen.

Vorteilhafte Ausführungsformen der vorliegenden Erfindung werden nachfolgend anhand der beiliegenden Zeichnungen erläutert. Es zeigen:

Figur 1     den Aufbau einer einer Warmwalzstraße nachgeschal- teten Kühlstrecke und deren Regelung;

Figur 2     ein Diagramm, aus dem eine Abkühlkurve zweier ver- schiedener Bänder hervorgeht;

Figur 3    eine Diagramm, aus dem der zeitliche Verlauf eines Gefügeumwandlungsgrads zweier Bänder hervorgeht;

Figur 4    eine Kurve, die für jedes Paar geeigneter Korrek- turfaktoren die modellgerechnete Temperatur wieder- gibt;

Figur 5    ein Diagramm, in dem Isothermen in einer durch ein Paar Korrekturfaktoren aufgespannten Ebene einge- zeichnet sind;

Figur 6    einen Ablaufplan zur Berechnung der Modellkorrektur der für die in Figur 1 gezeigte Kühlstrecke verwen- deten Regelung.

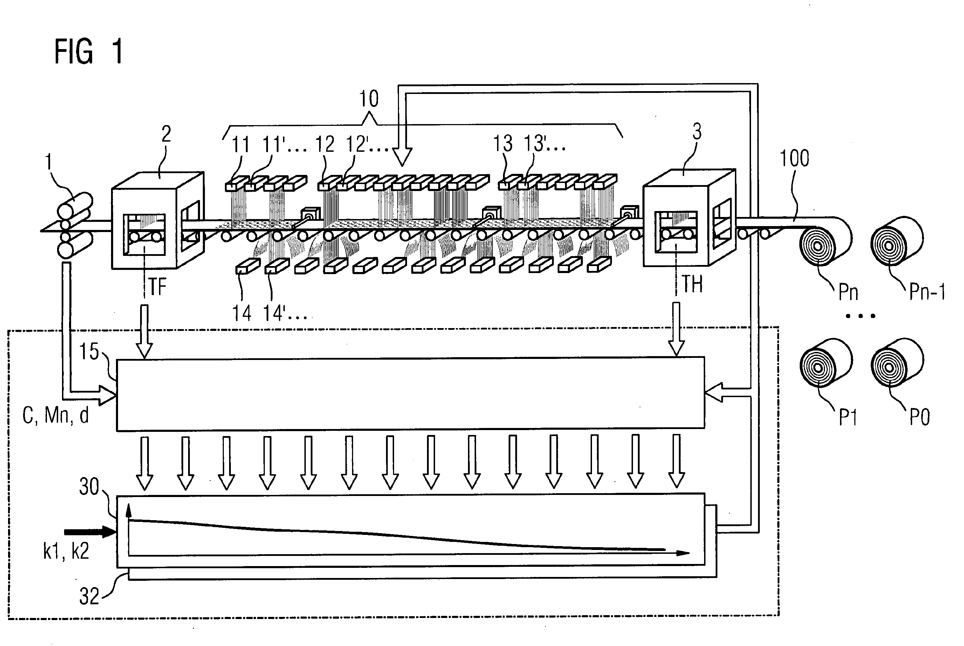

Zunächst wird Bezug genommen auf Figur 1. Figur 1 ist aus der EP 1 244 816 B1 übernommen und entsprechend der vorliegenden Erfindung modifiziert. Insoweit wird auf diese Patentschrift verwiesen.

Ein Walzband 100 durchläuft, nachdem es das letzte Walzgerüst 1 der Walzstraße passiert hat eine Kühlstrecke, wobei an einem mit 2 bezeichneten Fertigstraßenmessplatz eine Eingangstemperatur TF und an einem mit 3 bezeichneten Haspeltemperaturmessplatz eine Ausgangstemperatur TH gemessen wird. Zwischen den beiden Messplätzen finden sich Ventilgruppen 11, 11', 12, 12', 13, 13', 14, 14', ...., welche insgesamt die Kühlstrecke 10 bilden. Die gemessenen Temperaturen werden als Temperaturdifferenz TF-TH einem physikalisch-mathematischen Modell 15 der Kühlstrecke zugeführt. Daneben werden dem Modell 15 noch als Eingangsgrößen Materialparameter des momentan zu kühlenden Bandes, beispielsweise ein Kohlenstoffgehalt C des Bandes 100, ein Mangangehalt Mn des Bandes 100, sowie eine Dicke des Bandes d zugeführt, und optional die Bandgeschwindigkeit etc..

Mit dem Modell 15 werden nun einzelne Zwischenwerte für die Temperatur über die Kühlstrecke errechnet, um daraus die Ventilstellungen der einzelnen Ventile einstellen zu können. Nun sind der Genauigkeit des Modells jedoch Grenzen gesetzt, etwa weil nicht alle Einflussgrößen genau bekannt sind. Beispielsweise sind der Wärmeübergang an der Stahloberfläche und die Geschwindigkeit der Stahlumwandlung in Abhängigkeit vom gekühlten Material nur ungenau bekannt. Daher werden Korrekturfaktoren für das Modell 15 ermittelt, die mit k1, k2 bezeichnet sind, wobei k1 einen Korrekturfaktor bezeichnet, der den im Modell angenommenen Wärmeübergang im Band modifiziert und k2 einen Korrekturfaktor, der die im Modell angenommene Geschwindigkeit des Phasenübergangs im Band modifiziert. Aus dem mit den Korrekturfaktoren k1, k2 korrigierten Modell 15 wird somit eine gewünschte Abkühlkurve des Bandes 100 berechnet, welche mit 30 bezeichnet ist, sowie eine Gefügezustandskurve, welche mit 32 angedeutet ist. Mit der Abkühlkurve 30 und/oder der Gefügezustandskurve 32 wird dann die Kühlstrecke 10 geregelt.

Dabei sei darauf hingewiesen, dass die Abkühlkurve durch die Phasenumwandlungsgeschwindigkeit beeinflusst wird und dass daher auch ein Einfluss der Phasenübergangsgeschwindigkeit des Gefüges in die Abkühlkurve eingerechnet werden kann, um damit die Kühlstrecke 10 zu regeln.

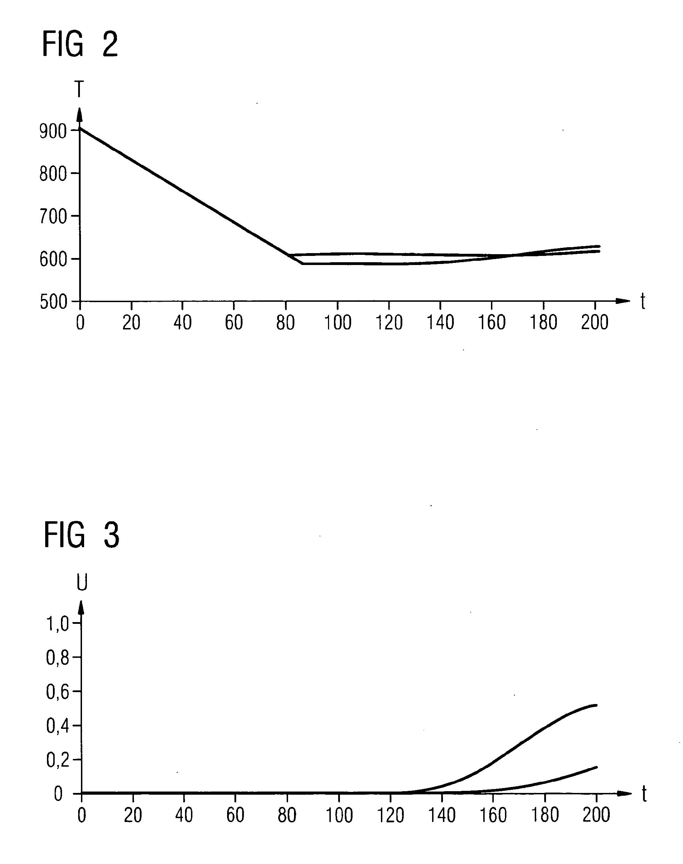

In Figur 2 ist dabei eine derartige Abkühlkurve eines Referenzbands zu entnehmen, das mit leicht verschiedenen Ventileinstellungen gekühlt worden ist. Über die Zeit t ist die Temperatur T aufgetragen. Man erkennt, dass der Abkühlverlauf des Referenzbands bei unterschiedlichen Ventileinstellungen unterschiedlich ist und somit von den Ventilstellungen abhängt.

Figur 3 gibt dagegen den Einfluss der Ventilstellungen auf die Umwandlungsgeschwindigkeit des Referenzbands beim Abkühlen wieder. In dem Diagramm ist dabei über die Zeit t die Gefügeumwandlungsgeschwindigkeit U aufgetragen, wobei die Gefügezustandkurve des Referenzbands bei leicht unterschiedlichen Ventileinstellungen eingetragen ist. Man erkennt, dass es auch zu Abweichungen im Gefüge der beiden Bändern kommt, was unerwünscht ist. Die Genauigkeit der Steuerung hängt dabei davon ab, wie genau man mit einem Modell die Abweichungen beschreiben kann. Daher ist ein korrigiertes Modell vorteilhaft.

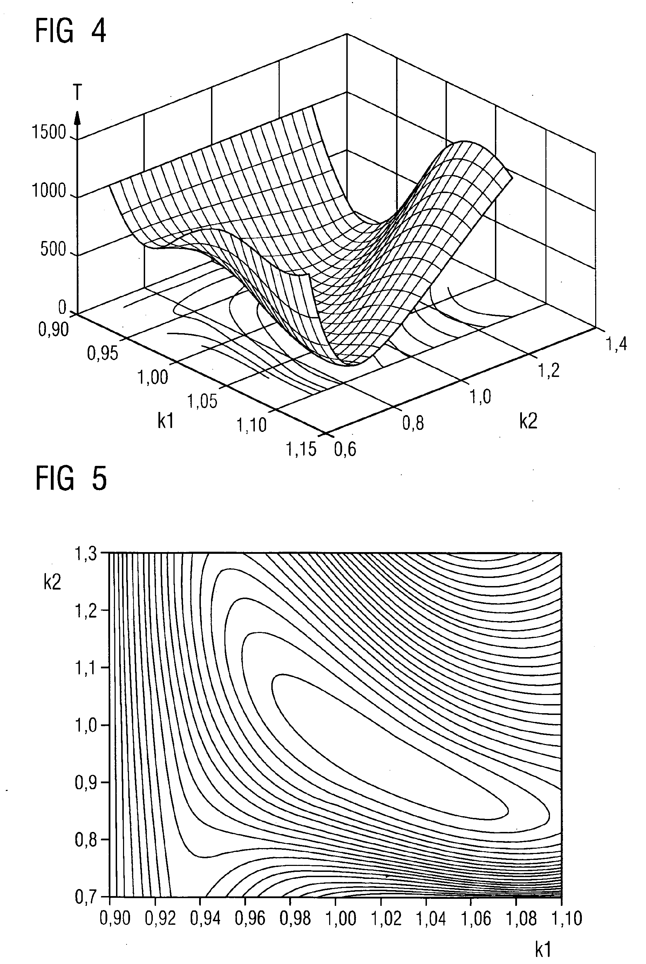

Zur Ermittlung der N=2 Korrekturfaktoren k1, k2 stehen somit M=1 Messungen (Die Messwerte TF- TH) pro Band zur Verfügung. Gemäß der vorliegenden Ausführungsform der Erfindung werden zum Ermitteln der beiden Korrekturfaktoren k1, k2 für das momentan zu fertigende Produkt, nämlich ein Coil Pn bzw. eine Haspel mit dem darauf aufgewickelten, abgekühlten Band 100, die abgespeicherten Produktdatensätze von zuvor gefertigten Produkten P0 bis Pn-1 verwendet. Dazu sei auf die Figuren 4 bis 6 verwiesen.

In den Produktdatensätzen PD0 bis PDn jedes Produkts kann hierfür eine Kurve gespeichert werden, welche für verschiedene Wertepaare der Korrekturfaktoren k1, k2, die vom Modell berechnete Temperatur wiedergibt. Ein Beispiel einer derartigen Kurve ist in Figur 4 wiedergegeben. Dabei sind PD0 bis PDn-1 abgespeicherte Produktdatensätze vorproduzierter Produkte und PDn der beim aktuell zu erzeugenden Produkt noch zu erstellende Produktdatensatz, der dann bei der Erzeugung des nächsten Produkts Pn+1 herangezogen werden kann.

Figur 5 zeigt eine Darstellung von Isothermen der Kurve aus Fig. 4 in einer von den Korrekturfaktoren k1, k2 aufgespannten Ebene. Man erkennt, dass es für jede gewünschte Temperatur eine Menge an geeigneten Wertepaaren k1, k2 gibt, die auf der Isothermen liegen. Auch eine Abspeicherung in der in Figur 5 gezeigten Form wäre denkbar.

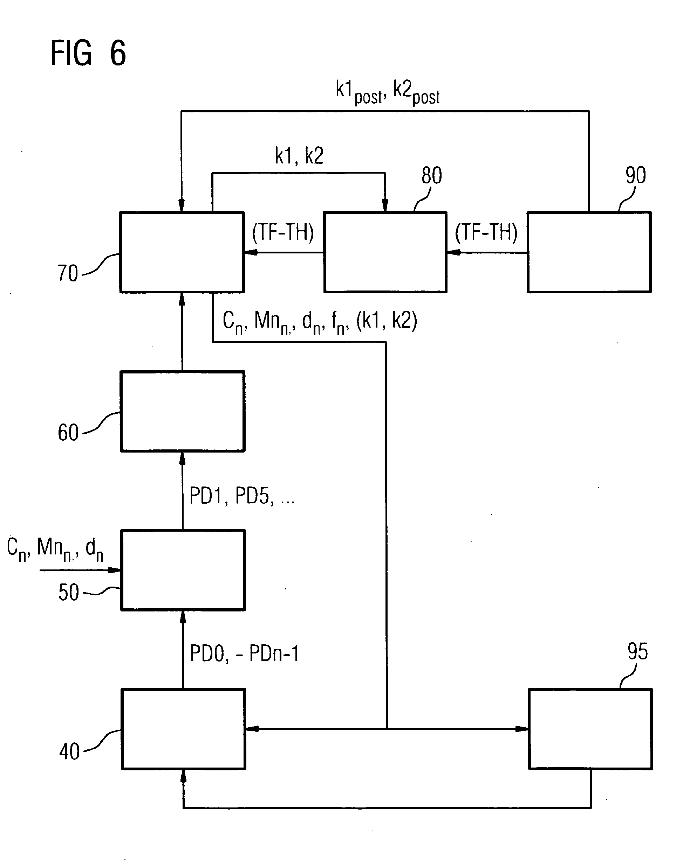

Aus den zu den vorhergehenden Produkten in den Produktdatensätzen PD0 bis Pdn-1 abgelegten Werten werden nun die Korrekturfaktoren k1, k2 für das aktuell zu fertigende Produkt Pn durch Zusammenschau nach dem in Figur 6 gezeigten Ablaufplan ermittelt. Mit 40 ist dabei eine Speichereinheit bezeichnet, in der die Produktdatensätze der zuvor gefertigten Produkte P0 bis Pn-1 abgelegt sind. Aus diesem Speicher werden mit einer Sucheinrichtung 50 geeignete, nämlich dem momentan zu fertigenden Produkt Pn ähnliche Produktdatensätze ausgewählt. Dazu vergleicht die Sucheinheit 50 die Material- (und optional Fertigungsanlagen-) - Parameter des aktuell zu fertigenden Produkts Pn mit den abgelegten Produktdatensätzen der zuvor gefertigten Produkte Pn - 1 bis P0.

Als Materialparameter des aktuell zu fertigenden Produkts Pn werden im dargestellten Beispiel der Kohlenstoffgehalt $C_n$, der Mangangehalt $Mn_n$, sowie die Dicke $d_n$ des momentan zu fertigenden Produkts Pn mit den entsprechenden, in den abgespeicherten Produktdatensätzen P0-Pn-1 abgelegten Materialparametern der zuvor gefertigten Produkte verglichen. Auf dieser Basis wird dann entschieden, welche Produktdatensätze als ähnlich angesehen werden (im dargestellten Beispiel PD1, PD5, ...) und welche nicht. Die ähnlichen Produktdatensätze PD1, PD5, ... werden nun zur Berechnung von Korrekturfaktoren k1, k2 für das momentan zu fertigende Produkt herangezogen und dazu einer Recheneinheit 60 zugeleitet. Die Recheneinheit 60 berechnet dabei Lösungen, indem sie Minima einer Funktion gemäß der folgenden Gleichung ermittelt:

$$\text{Min}\left(\sum_{i=1}^{l} g_i \left(f_i(k1,\ k2) - T_i\right)^2\right)$$

wobei

$l$ die Anzahl der ähnlichen Produkte (im Beispiel PD1, PD5, ....),

$g_i$ einem Gewichtungsfaktor, der sich nach dem Alter des jeweiligen Produktdatensatzes richtet,

$f_i(k1, k2)$ dem als Funktion der Korrekturfaktoren k1, k2 abgelegten Rechenwerts nach Fig. 4, und

$T_i$ der bei dem jeweiligen Produkt tatsächlich gemessenen Temperatur

entspricht.

Das Alter der Produktdatensätze lässt man dabei optional einfließen, um den Einfluss einer "Drift" nicht nachgehaltener Parameter wegen Veränderlictikeit der Anlage, z.B. durch Wartung oder Alterung möglichst klein zu halten. Im Optimalfall ist das aber nicht nötig. Daher kann das Alter berücksichtigt werden, muss aber nicht.

In die Echtzeitüberwachungseinheit 80 gehen die momentan gemessenen Temperaturwerte TF-TH ein, so dass in einer Postberechnungseinheit 90 anhand der gemessenen Temperaturwert TF-TH eine Nachführung der Korrekturwerte k1, k2, beispielsweise anhand eines Gradientenabstiegsverfahrens durchgeführt werden kann.

Die nachgeführten Korrekturwerte $k1_{post}$, $k2_{post}$ werden dann in die Vorberechnungseinheit 70 rückgeführt und können zur Steuerung bzw. Regelung der Strecke herangezogen werden.

Nach Abschluss der Produktion des momentan zu produzierenden Produkts Pn werden die Materialkenngrößen $T_n$, $Mn_n$, dn, sowie die Funktion $f_n$ (k1, k2) der für die Korrekturfaktoren berechneten Temperaturen in einem Produktdatensatz abgespeichert und der Speichereinheit 40 zugeführt. Mit 95 ist dabei ein Backup-Speicher bezeichnet, um als Redundanzsicherheit für den Produktdatenspeicher 40 zu dienen.

Selbstverständlich sind im Rahmen der Erfindung Abweichungen und Modifizierungen des dargestellten Beispiels denkbar.

**Patentansprüche**

1. Verfahren zur Steuerung und/oder Regelung eines industriellen Prozesses (10) zur Fertigung oder Bearbeitung von Produkten (100), wobei

   ein physikalisch-mathematisches Modell (15) des industriellen Prozesses (10) gebildet wird, mit dem Steuergrößen zur Steuerung bzw. Regelung des industriellen Prozesses berechnet werden,

   während der Fertigung oder Bearbeitung des Produkts (100) eine Anzahl (M) von Messwerten (TF-TH) erfasst wird,

   das Modell (15) mit einer Anzahl (M) Primärkorrekturfaktoren (k1) und mit einer Anzahl (N-M) Sekundärkorrekturfaktoren (k2) korrigiert wird, wobei die Anzahl (M) Primärkorrekturfaktoren (k1) gleich der Anzahl (M) von Messwerten (TF-TH) ist und die Anzahl (N) aller Korrekturfaktoren (k1, k2) größer als die Anzahl (M) von Messwerten (TF-TH) ist, und wobei zumindest die Sekundärkorrekturfaktoren (k2) numerisch berechnet werden, **dadurch gekennzeichnet, dass** zu jedem Produkt (P0-Pn) als Produktdatensatz (PDO-PDn) abgespeichert werden:

   charakteristische Eingangsgrößen (C, Mn, d, ...), sowie nicht die bei der Bearbeitung oder Fertigung des Produkts gewählten Korrekturfaktoren (k1, k2), sondern eine Anzahl (M) von bei der Fertigung oder Bearbeitung des Produkts (P0-Pn) gemachten Erfahrungen wiedergebender Erfahrungswerte (TF-TH; f(k1, k2) ; [k1(s), k2(s)]),

   falls genügend gespeicherte Produktdatensätze (PD0 - PDn-1) vorhanden sind, anhand eines Vergleichs der charakteristische Eingangsgrößen (C, Mn, d, ...) des aktuellen Produkts (Pn) mit den charakteristischen Eingangsgrößen (C, Mn, d, ...) in den Produktdatensätzen (PD0 - PDn-1) zuvor gefertigter oder bearbeiteter Produkte (P0 - Pn-1) ähnliche Produktdatensätze (PD1, PD5, ...) ausgewählt werden,

wobei die Korrekturfaktoren (k1, k2) für das aktuelle Produkt (Pn) anhand der in den ähnlichen Produktdatensätzen (PD1, PD5, ...) gespeicherten Erfahrungswerte (TF-TH; f(k1, k2); [k1(s), k2(s)]) ermittelt werden.

2. Verfahren nach Anspruch 1, **dadurch gekennzeichnet, dass** der industrielle Prozess (10) eine Kühlstrecke (10) einer Warmbandstraße zum Herstellen von Stahl- bzw. Blechbändern (100) ist und die herzustellenden Produkte (100) die Stahl- bzw. Blechbänder (100),

die Steuergrößen Soll-Ventilstellungen von entlang der Kühlstrecke (10) angeordneten Kühlwasserventilen (11, 11', 12, 12', ...) sind,

die Anzahl Messwerte (M) eine während der Herstellung des Bandes (100) zwischen Eingang (TF) der Kühlstrecke (10) und Ausgang (TH) der Kühlstrecke (10) auftretende Temperaturdifferenz (TF-TH) ist, also gleich 1 ist (M=1),

die Anzahl (M) Primärkorrekturfaktoren (k1) ein den Wärmeübergang vom zu kühlenden Band (100) in die Umgebung wiederspiegelnden Korrekturfaktor (k1) ist, also gleich 1 ist,

die Anzahl (N-M) Sekundärkorrekturfaktoren (k2) ein die Geschwindigkeit der Phasenumwandlung im zu kühlenden Band (100) wiederspiegelnder Korrekturfaktor (k2) ist, also gleich 1 ist,

so dass die die Anzahl (N) aller Korrekturfaktoren (k1, k2) gleich 2 ist, also glrößer als die Anzahl aller Messwerte, wobei

die charakteristischen Eingangsgrößen (C, Mn, d, ...) beispielsweise Blechdicke, und -breite, Kohlenstoff- und Mangangehalt sind.

3. Verfahren nach Anspruch 1 oder 2, **dadurch gekennzeichnet, dass** die Korrekturfaktoren (k1, k2) aus dem Modell (15) und der Anzahl Messwerte (TF-TH) mithilfe eines iterativen Optimierungsalgorithmus ermittelt werden, bei dem für jeden der Korrekturfaktoren (k1, k2) eine Vielzahl von Testwerten angegeben wird, wobei der Optimierungsalgorithmus beispielsweise ein Gradientenabstiegsverfahren ist.

4. Verfahren nach Anspruch 1 oder 2, **dadurch gekennzeichnet, dass** jeder Primärkorrekturfaktor (k1) aus der Differenz eines mit dem Modell (15) berechneten Werts mit einem der Messwerte (TF-TH) gebildet wird, wobei die Anzahl (M) Primärkorrekturfaktoren (k1) und die Anzahl (M) Messwerte (TF-TH) gleich groß ist.

5. Verfahren nach Anspruch 1 oder 2, **dadurch gekennzeichnet, dass** während der Fertigung oder Bearbeitung jedes Produkts (P0-Pn) zumindest eine der Anzahl (M) an Primärkorrekturfaktoren (k1) entsprechende Anzahl (M) an Messwerten (TF-TH) erfasst wird,

für jeden der Korrekturfaktoren (k1, k2) eine Vielzahl von Testwerten angegeben wird,

mithilfe des Modells, der Anzahl (M) an Messwerten (TF-TH) und der Vielzahl von Testwerten eine Anzahl (M) an Rechenwerten (f(k1, k2)) jeweils als Funktion der Korrektur-faktoren (k1, k2) ermittelt wird, und

die Anzahl (M) an Rechenwerten (f(k1, k2)) als die Anzahl (M) an Erfahrungswerten (f(k1, k2)) abgespeichert wird, wobei für das aktuelle Produkt (Pn) nach der Ermittlung der ähnlichen Produktdatensätze (PD1, PD5, ...) aus den Rechenwerten (f(k1, k2)) der ähnlichen Produktdatensätze (PD1, PD5, ...) geeignete Korrekturfaktoren (k1, k2) ermittelt werden, die bei den ähnlichen Produkten das beste Ergebnis liefern.

6. Verfahren nach Anspruch 5, **dadurch gekennzeichnet, dass** die Anzahl an Messwerten (TF-TH) in die Anzahl (M) an Rechenwerten (f(k1, k2)) einfließt.

7. Verfahren nach Anspruch 5, **dadurch gekennzeichnet, dass** die Anzahl an Messwerten jeweils als separater Erfahrungswert gespeichert werden.

8. Verfahren nach Anspruch 1 oder 2, **dadurch gekennzeichnet, dass** während der Fertigung oder Bearbeitung des Produkts (Pn) zumindest eine der Anzahl (M) an Primärkorrekturfaktoren (k1) entsprechende Anzahl (M) an Messwerte (TF-TH) erfasst wird, für jeden der Korrekturfaktoren (k1, k2) eine Vielzahl von Testwerten angegeben wird, und

mithilfe des Modells und der Anzahl (M) an Messwerten (TF-TH) und der Vielzahl von Testwerten eine N-M-dimensionale Fläche, beispielsweise eine Kurve ([k1(s), k2(s)]) berechnet wird auf der ein mit dem Modell berechneter Rechenwert mit dem Messwert (TF-TH) übereinstimmt, wobei die N-M-dimensionale Fläche, beispielsweise Kurve ([k1(s), k2(s)]) als Erfahrungswert (f(k1, k2)) abgespeichert wird, wobei N die Anzahl aller Korrekturfaktoren (k1, k2) ist und M die Anzahl an zur Verfügung stehenden Messwerten, und wobei

für das aktuelle Produkt nach der Ermittlung der ähnlichen Produktdatensätze (PD1, PD5, ...) aus den N-M-dimensionalen Flächen, beispielsweise Kurven ([k1(s), k2(s)]) der ähnlichen Produktdatensätze (PD1, PD5, ...) geeignete Korrekturfaktoren (k1, k2) ermittelt werden, die bei den ähnlichen Produkten das beste Ergebnis liefern.

9. Verfahren nach Anspruch 8, **dadurch gekennzeichnet, dass** zur Ermittlung geeignete Korrekturfaktoren (k1, k2) aus in den ähnlichen Produktdatensätze (PD1, PD5, ...) gespeicherten N-M-dimensionalen Flächen ([k1(s), k2(s)]) die Schnittpunkte der in den ähnlichen Produktdatensätze (PD1, PD5, ...) gespeicherten N-M-dimensionale Flächen ([k1(s), k2(s)]) bestimmt werden.

10. Verfahren nach Anspruch 9, **dadurch gekennzeichnet, dass** aus den Schnittpunkten durch Mittelwertbildung geeignete Korrekturfaktoren (k1, k2) ermittelt werden.

11. Verfahren nach Anspruch 1 oder 2, **dadurch gekennzeichnet, dass**
die zu jedem Produkt (P0-Pn) gespeicherten Produktdatensätze (PD0 - PDn) eine nachträgliche Modellberechnung zulassen und als die Anzahl (M) an Erfahrungswerten (TF-TH) eine der Anzahl (M) an Primärkorrekturfaktoren (k1) entsprechende Anzahl (M) an Messwerten (TF-TH) gespeichert wird, wobei zur Ermittlung der Korrekturfaktoren (k1, k2) für das aktuelle Produkt (Pn) wiederholt für jeden der Korrekturfaktoren (k1, k2) geeignete Testwerte vorgegeben werden und unter Heranziehen der jeweils vorgegebenen Testwerte für jeden ähnlichen Produktdatensatz (PD1, PD5, ...) die dort abgespeicherten Messwerte (TF-TH) mit berechneten Werten verglichen werden, die mit einer auf Basis der in dem jeweiligen ähnlichen Produktdatensatz abgespeicherten Werte durchgeführten Modellberechnung berechnet werden, und
anschließend diejenigen Testwerte als Korrekturfaktoren (k1, k2) eingesetzt werden, die für die ähnlichen Produktdatensätze die besten Ergebnisse geliefert haben.

12. Verfahren nach einem der Ansprüche 2 bis 11, **dadurch gekennzeichnet, dass** die Testwerte nach einem mathematischen Optimierungsverfahren vorgegeben werden, bei dem eine Zielfunktion gebildet wird, welche maximiert oder minimiert wird.

13. Verfahren nach einem der vorhergehenden Ansprüche, **dadurch gekennzeichnet, dass** die ermittelten Korrekturfaktoren (k1, k2) mittels aktueller Messwerte (TF-TH) in oder nahe Echtzeit nachgeführt werden, insbesondere mittels eines Gradientenabstiegsverfahrens.

14. Rechenprogrammsoftware, **dadurch gekennzeichnet, dass** das Programm ein Verfahren nach einem der vorhergehenden Ansprüche implementiert.

15. Datenträger mit einem Rechenprogramm nach Anspruch 14.

16. Recheneinheit mit einem darauf lauffähigen Rechenprogramm nach Anspruch 14.

**Claims**

1. Method for the open-loop and/or closed-loop control of an industrial process (10) for manufacturing or processing products (100), wherein
a physicomathematical model (15) of the industrial process (10) is formed that is used to calculate controlled variables for the open-loop or closed-loop control of the industrial process,
a number (M) of measured values (TF-TH) is acquired during the manufacture or processing of the product (100),
the model (15) is corrected with the aid of a number (M) of primary correction factors (k1), and with the aid of a number (N-M) of secondary correction factors (k2), the number (M) of primary correction factors (k1) being equal to the number (M) of measured values (TF-TH), and the number (N) of all the correction factors (k1, k2) being greater than the number (M) of measured values (TF-TH), and at least the secondary correction factors (k2) being calculated numerically, **characterized in that** stored as product data record (PDO-PDn) in relation to each product (P0-Pn) are:

characteristic input variables (C, Mn, d, ...) as well as not the correction factors (k1, k2) selected during the processing or manufacturing of the product, but a number (M) of empirical values (TF-TH; f(k1, k2); [k1(s), k2(s)]) reproducing experience gained in the manufacture or processing of the product (P0-Pn),
if sufficient stored product data records (PD0 - PDn-1) are present, a comparison of the characteristic input variables (C, Mn, d, ...) of the current product (Pn) with the characteristic input variables (C, Mn, d, ...) in the product data records (PD0 - PDn-1) of previously manufactured or processed products (P0 - Pn-1) is used to select similar product data records (PD1, PD5, ...),
wherein the correction factors (k1, k2) of the current product (Pn) are determined with the aid of the empirical values (TF-TH; f(k1, k2); [k1(s), k2(s)] stored in the similar product data records (PD1, PD5, ...).

2. Method according to Claim 1, **characterized in that**
the industrial process (10) is a cooling line (10) of a hot strip mill for producing steel strips or sheet metal strips (100), and the products (100) to be manufactured are steel and/or sheet metal strips (100),
the controlled variables are desired valve positions of cooling water valves (11, 11', 12, 12', ...) arranged along the cooling line (10),
the number of measured values (M) is a temperature difference (TF-TH) occurring during the production of the strip (100) between the input (TF) of the cooling line (10) and the output (TH) of the cooling line (10), that is to say equal to 1 (M=1),
the number (M) of primary correction factors (k1) is a correction factor (k1) reflecting the heat transfer from the strip (100) to be cooled into the environment, that is to say is equal to 1,
the number (N-M) of secondary correction factors (k2) is a correction factor (k2) reflecting the speed of the phase transformation in the strip (100) to be cooled, that is to say is equal to 1,
so that the number (N) of all the correction factors (k1, k2) is equal to 2, that is to say greater than the number of all the measured values, wherein
the characteristic input variables (C, Mn, d, ...) are, for example, the sheet thickness and width, carbon and manganese content.

3. Method according to Claim 1 or 2, **characterized in that** the correction factors (k1, k2) are determined from the model (15) and the number of measured values (TF-TH) with the aid of an iterative optimization algorithm in the case of which a multiplicity of test values are specified for each of the correction factors (k1, k2), wherein the optimization algorithm is, for example, a gradient descent method.

4. Method according to Claim 1 or 2, **characterized in that** each primary correction factor (k1) is formed from the difference between a value calculated with the aid of the model (15) and one of the measured values (TF-TH), the number (M) of primary correction factors (k1) and the number (M) of measured values (TF-TH) being equally large.

5. Method according to Claim 1 or 2, **characterized in that** during the manufacture or processing of each product (P0-Pn) at least a number (M), corresponding to the number (M) of primary correction factors (k1), of measured values (TF-TH) is acquired, a multiplicity of test values are specified for each of the correction factors (k1, k2), with the aid of the model, the number (M) of measured values (TF-TH) and the multiplicity of test values a number (M) of computed values (f(k1, k2)) is respectively determined as a function of the correction factors (k1, k2), and the number (M) of computed values (f(k1, k2)) is stored as the number (M) of empirical values (f(k1, k2)), wherein after the determination of the similar product data records (PD1, PD5, ...), the computed values (f(k1, k2)) of the similar product data records (PD1, PD5, ...) are used to determine for the current product (Pn) suitable correction factors (k1, k2) that supply the best result for the similar products.

6. Method according to Claim 5, **characterized in that** the number of measured values (TF-TH) features in the number (M) of computed values (f(k1, k2)).

7. Method according to Claim 5, **characterized in that** the number of measured values is respectively stored as separate empirical value.

8. Method according to Claim 1 or 2, **characterized in that** during the manufacture or processing of the product (Pn) at least a number (M), corresponding to the number (M) of primary correction factors (k1), of measured values (TF-TH) is acquired, a multiplicity of test values are specified for each of the correction factors (k1, k2), with the aid of the model and the number (M) of measured values (TF-TH) and the multiplicity of test values an N-M-dimensional plane, for example a curve ([k1(s), k2(s)]) is calculated on which a computed value calculated with the aid of the model corresponds to the measured value (TF-TH), the N-M-dimensional plane, for example curve ([k1(s), k2(s)]), being stored as empirical value (f(k1, k2)), N being the number of all the correction factors (k1, k2), and M the number of available measured values, and wherein after the determination of the similar product data records (PD1, PD5, ...), the N-M-dimensional planes, for example curves ([k1(s), k2(s)]) of the similar product data records (PD1, PD5, ...) are used to determine for the current product suitable correction factors (k1, k2) that supply the best result for the similar products.

9. Method according to Claim 8, **characterized in that** N-M-dimensional planes ([k1(s), k2(s)]) stored in the similar product data records (PD1, PD5, ...) are used to ascertain the points of intersection of the N-M-dimensional planes [(k1(s), k2(s)]) stored in the similar product data records (PD1, PD5, ...) in order to determine suitable correction factors (k1, k2).

10. Method according to Claim 9, **characterized in that** suitable correction factors (k1, k2) are determined from the points of intersection by averaging.

11. Method according to Claim 1 or 2, **characterized in that** the product data records (PD0 - PDn) stored in relation to each product (P0-Pn) permit a subsequent model calculation, and a number (M), corresponding to the number (M) of primary correction factors (k1), of measured values (TF-TH) is stored as the number (M) of empirical values (TF-TH), wherein test values suitable for each of the correction factors (k1, k2) are repeatedly prescribed in order to determine the correction factors (k1, k2) for the current product (Pn), and the respectively prescribed test values for each similar product data record (PD1, PD5, ...) are used to compare the measured values (TF-TH) stored there with calculated values that are calculated with the aid of a model calculation carried out on the basis of the values stored in the respective similar product data record, and use is subsequently made as correction factors (k1, k2) of those test values that have supplied the best results for the similar product data records.

12. Method according to one of Claims 2 to 11, **characterized in that** the test values are prescribed using a mathematical optimization method in the case of which a target function is formed that is maximized or minimized.

13. Method according to one of the preceding claims, **characterized in that** the determined correction factors (k1, k2) are corrected by means of current measured values (TF-TH) in, or virtually in real time, in particular by means of a gradient descent method.

14. Computing program software **characterized in that** the program implements a method according to one of the preceding claims.

15. Data carrier having a computing program according to Claim 14.

16. Arithmetic logic unit having a computing program according to Claim 14 that can run thereon.

## Revendications

1. Procédé de commande et/ou de régulation d'un processus ( 10 ) industriel pour la fabrication ou le traitement de produit ( 100 ), dans lequel
on forme un modèle ( 15 ) physico-mathématique du processus ( 10 ) industriel par lequel on calcule des grandeurs de commande pour la commande ou la régulation du processus industriel,
pendant la fabrication ou le traitement du produit ( 100 ), on relève un certain nombre ( M ) de valeurs ( TF-TH ) de mesure,
on corrige le modèle ( 15 ) par un certain nombre ( M ) de facteurs ( k1 ) de correction primaire et par un certain nombre ( N-M ) de facteurs ( k2 ) de correction secondaire, le nombre ( M ) de facteurs ( k1 ) de correction primaire étant égal au nombre ( M ) de valeurs ( TF-TH ) de mesure et le nombre ( N ) de tous les facteurs ( k1, k2 ) de correction étant plus grand que le nombre ( M ) de valeurs ( TF-TH ) de mesure et dans lequel on calcule numériquement au moins les facteurs ( k2 ) de correction secondaire, **caractérisé en ce que**
pour chaque produit ( P0-Pn ) on mémorise sous la forme d'un jeu ( PD0-PDn ) de données de produit :

  des grandeurs ( C, Mn, d, ... ), d'entrée caractéristiques ainsi que

non les facteurs ( k1, k2 ) de correction, qui ont été choisis lors du traitement ou de la fabrication du produit, mais un nombre ( M ) de valeurs ( TF-TH ), f( k1, k2 ), [k1( s ), k2( s )] ), d'expériences données par des expériences faites lors de la fabrication ou du traitement du produit ( PD0 - PDn-1 ),
s'il y a suffisamment de jeux ( PD0 - PDn-1 ) de données de produit mémorisés, on choisit au moyen d'une comparaison des grandeurs ( C, Mn, D, ... ) d'entrée caractéristiques du produit ( Pn ) actuel aux grandeurs ( C, Mn, d, ... ) d'entrée caractéristiques dans les jeux ( PD0 - PDn-1 ) de produits, des jeux ( PD1, PD5, ... ) de données de produit semblables pour des produits ( P0 -Pn-1 ) fabriqués ou traités auparavant,
les facteurs ( k1, k2 ) de correction pour le produit ( Pn ) actuel étant déterminés au moyen des valeurs ( TF-TH ; f( k1, k2 ) ; [k1( s ), k2( s )] ) d'expérience mémorisées dans les jeux ( PD1 - PD5, ... ) de données de produit semblables.

2. Procédé suivant la revendication 1, **caractérisé en ce que** le processus ( 10 ) industriel est une section ( 10 ) de refroidissement d'un train de laminage à chaud pour la fabrication de feuillards ( 100 ) d'acier ou de tôle et les produits ( 100 ) à fabriquer sont les feuillards ( 100 ) d'acier ou de tôle,
les grandeurs de commande sont des positions de consigne de vannes ( 11, 11', 12, 12', ... ) d'eau de refroidissement disposées le long de la section ( 10 ) de refroidissement,
le certain nombre ( M ) de valeurs de mesure est une différence ( TF-TH ) de température se produisant pendant la fabrication du feuillard ( 100 ) entre l'entrée ( TF ) de la section ( 10 ) de refroidissement et la sortie ( TH ) de la section ( 10 ) de refroidissement, en étant donc égal à 1 ( M=1 ),
le certain nombre ( M ) de facteurs ( k1 ) de correction primaire est un facteur ( k1 ) de correction reflétant le transfert de chaleur du feuillard ( 100 ) à refroidir à l'atmosphère ambiante, en étant donc égal à 1,
le certain nombre ( N-M ) de facteurs ( k2 ) de correction secondaire est un facteur ( k2 ) de correction reflétant la vitesse de transformation de phase dans le feuillard ( 100 ) à refroidir, en étant donc égal à 1, de sorte que le nombre ( N ) de tous les facteurs ( k1, k2 ) de correction est égal à 2, en étant donc plus grand que le nombre de toutes les valeurs de mesure, dans lequel les grandeurs ( C, Mn, d, ... ) d'entrée caractéristiques sont par exemple l'épaisseur de la tôle et la largeur de la tôle, la teneur en carbone et la teneur en manganèse.

3. Procédé suivant la revendication 1 ou 2, **caractérisé en ce que** les facteurs ( k1, k2 ) de correction sont déterminés à partir du modèle ( 15 ) et du nombre des valeurs ( TF-TH ) de mesure à l'aide d'un algorithme itératif d'optimisation, dans lequel on indique pour chacun des facteurs ( k1, k2 ) de correction une pluralité de valeurs de test, l'algorithme d'optimisation étant par exemple un procédé de décroissance en gradient.

4. Procédé suivant la revendication 1 ou 2, **caractérisé en ce que** l'on forme chaque facteur ( k1 ) de correction primaire à partir de la différence entre une valeur calculée par le modèle ( 15 ) et l'une des valeurs ( TF-TH ) de mesure, le nombre ( M ) de facteurs ( k1 ) de correction primaire étant égal au nombre ( M ) de valeurs ( TF-TH ) de mesure.

5. Procédé suivant la revendication 1 ou 2, **caractérisé en ce que**, pendant la fabrication ou le traitement de chaque produit ( P0-Pn ), on relève au moins un nombre ( M ) de valeurs ( TF-TH ) de mesure correspondant au nombre ( M ) de facteurs ( k1 ) de correction primaire,
pour chacun des facteurs ( k1, k2 ) de correction, on indique une pluralité de valeurs de test,
au moyen du modèle, du nombre ( M ) de valeurs ( TF-TH ) de mesure et de la pluralité de valeurs de test, on détermine un nombre ( M ) de valeurs ( f( ( k1, k2 ) ) de calcul respectivement sous la forme d'une fonction des facteurs ( k1, k2 ) de correction, et on mémorise le nombre ( M ) de valeurs ( f( k1, k2 ) ) de calcul sous la forme du nombre ( M ) de valeurs ( f( k1, k2 ) ) d'expérience, dans lequel, pour le produit ( Pn ) actuel, on détermine, après la détermination des jeux ( PD1, PD5, ... ) de données de produit semblables à partir des valeurs ( f( k1, k2 ) ) de calcul des jeux ( PD1, PD5, ... ) de données de produit semblables, des facteurs ( k1, k2 ) de corrections appropriés, qui fournissent le meilleur résultat pour les produits semblables.

6. Procédé suivant la revendication 5, **caractérisé en ce que** l'on injecte le nombre de valeurs ( TF-TH ) de mesure dans le nombre ( M ) de valeurs ( f( k1, k2 ) ) de calcul.

7. Procédé suivant la revendication 5, **caractérisé en ce que** l'on mémorise le nombre de valeurs de mesure respectivement en tant que valeur d'expérience distincte.

8. Procédé suivant la revendication 1 ou 2, **caractérisé en ce que**, pendant la fabrication ou le traitement du produit ( Pn ), on relève au moins un nombre ( M ) de valeurs ( TF-TH ) de mesure correspondant au nombre ( M ) de facteurss ( k1 ) de correction primaire, on indique pour chacun des facteurs ( k1, k2 ) de correction une pluralité de valeurs de test, et à l'aide du modèle et du nombre ( M ) de valeurs ( TF-TH ) de mesure et la pluralité de valeurs de test, on calcule une surface en N-M dimensions, par exemple une courbe ( [k1( s ), k2( s )] ), sur laquelle une valeur de calcul calculée par le modèle coïncide avec la valeur ( TF-TH ) de mesure, la surface en N-M dimensions, par exemple la courbe ( [k1( s ), k2 ( s )] ), étant mémorisée en tant que valeur ( f( k1, k2 ) ) d'expérience, N étant le nombre de tous les facteurs ( k1, k2 ) de correction et M étant le nombre de valeurs de mesure disponibles, et dans lequel, pour le produit actuel, on détermine, après la détermination des jeux ( PD1, PD5, ... ) de données de produit semblables, à partir des surfaces en N-M dimensions, par exemple des courbes ( [k1( s ), k2 ( s )] ), des jeux ( PD1, PD5, ... ) de données de produit semblables, des facteurs ( k1, k2 ) de correction appropriés, qui fournissent le meilleur résultat pour les produits semblables.

9. Procédé suivant la revendication 8, **caractérisé en ce que**, pour la détermination de facteurs ( k1, k2 ) de correction appropriés à partir des surfaces ( [k1 ( s ), k2( s )] ) en N-M dimensions mémorisées dans les jeux ( PD1, PD5, ... ) de données de produit semblables, on détermine les points d'intersection des surfaces ( [ka( s ), k2( s )] ) dans N-M dimensions mémorisées dans les jeux ( PD1, PD5, ... ) de données de produit semblables.

10. Procédé suivant la revendication 9, **caractérisé en ce que** l'on détermine à partir des points d'intersection des facteurs ( k1, k2 ) de correction appropriés en formant une moyenne.

11. Procédé suivant la revendication 1 ou 2, **caractérisé en ce que**
les jeux ( PDO - PDn ) de données de produit mémorisés pour chaque produit ( P0 - Pn ) autorisent un calcul de modèle ultérieur et on mémorise, comme nombre ( M ) de valeurs ( TF-TH ) d'expérience, un nombre ( M ) de valeurs ( TF-TH ) de mesure correspondant au nombre ( M ) de facteurs ( k1 ) de correction primaire, dans lequel
pour la détermination des facteurs ( k1, k2 ) de correction pour le produit ( Pn ) actuel, on prescrit, de manière répétée pour chacun des facteurs ( k1, k2 ) de correction, des valeurs de test appropriés et, en tirant parti des valeurs de test prescrites respectivement pour chaque jeu ( PD1, PD5, ... ) de données de produit semblables, on compare les valeurs ( TF-TH ) de mesure, qui y sont mémorisées, à des valeurs calculées, qui sont calculées par un calcul de modèle effectué sur la base des valeurs mémorisées dans le jeu de données de produit semblables respectif, et
on introduit ensuite comme facteurs ( k1, k2 ) de correction les valeurs de test qui ont donné les résultats les meilleurs pour les jeux de données de produit semblables.

**12.** Procédé suivant l'une des revendications 2 à 11, **caractérisé en ce que** l'on prescrit les valeurs de test suivant un procédé d'optimisation mathématique, dans lequel on forme une fonction cible qui est maximisée ou minimisée.

**13.** Procédé suivant l'une des revendications précédentes, **caractérisé en ce qu'**on suit les facteurs ( k1, k2 ) de correction déterminés au moyen de valeurs ( TF-TH ) de mesure actuelles en temps réel ou presque en temps réel, notamment au moyen d'un procédé de décroissance à gradient.

**14.** Logiciel de programme informatique **caractérisé en ce que** le programme met en oeuvre un procédé suivant l'une des revendications précédentes.

**15.** Support de données ayant un programme informatique suivant la revendication 14.

**16.** Ordinateur ayant un programme informatique susceptible d'y passer suivant la revendication 14.

FIG 1

FIG 2

FIG 3

FIG 4

FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1244816 B1
- DE 10203787 A1
- DE 19641431